# FASCICULE DE BREVET EUROPEEN

(11) **EP 3 931 652 B1**
(45) Date de publication et mention de la délivrance du brevet: **11.10.2023**
(21) Numéro de dépôt: 20705229.1
(22) Date de dépôt: 24.02.2020
(51) Int. Cl.: G06Q 10/08, G06Q 50/04, G05B 19/418, B25J 9/16

(54) **SYSTEME DE STOCKAGE TEMPORAIRE D'OBJETS**
SYSTEM ZUR VORÜBERGEHENDEN LAGERUNG VON GEGENSTÄNDEN
SYSTEM FOR THE TEMPORARY STORAGE OF ITEMS

(30) Priorité: 28.02.2019 FR 1902044
(43) Date de publication de la demande: 05.01.2022
(73) Titulaire: Universite De Bretagne Sud, 56100 Lorient (FR)
(72) Inventeur: BOMEL, Pierre, 29900 CONCARNEAU (FR); MARTIN, Eric, 56100 LORIENT (FR)
(74) Mandataire: Cabinet Le Guen Maillet
(86) Numéro de dépôt international: PCT/EP2020/054768
(87) Numéro de publication internationale: WO 2020/173874

(56) Documents cités:
- EP-A2- 1 967 928
- JP-A- H07 178 652
- JP-A- 2013 254 261
- Epreuve A Comité D'examen: "EXAMEN EUROPEEN DE QUALIFICATION 2015", , 1 janvier 2015 (2015-01-01), XP055615717, Extrait de l'Internet: URL:http://documents.epo.org/projects/baby lon/eponot.nsf/0/503E14F9739DDF51C1257DFE0 05298C2/$File/A_EM_2015_fr.pdf [extrait le 2019-08-27]

## Description

### DOMAINE TECHNIQUE

La présente invention concerne le domaine du stockage temporaire d'objets. Un domaine technique d'application de la présente invention est l'agencement d'une chaîne de production. Plus précisément, la présente invention propose un système de stockage temporaire qui est destiné à s'intercaler entre un poste amont et un poste aval de la chaîne de production, et qui permet de gérer de manière automatique un séquencement en sortie du système de stockage temporaire vers le poste aval d'objets précédemment présentés au système de stockage temporaire depuis le poste amont.

### ETAT DE LA TECHNIQUE ANTERIEURE

Dans une chaîne de production, les différentes opérations de fabrication, de transformation ou d'assemblage d'un produit sont effectuées successivement au niveau de postes de travail disposés dans un ordre préétabli.

Dans une configuration en ligne où les postes de travail se succèdent, le flux de production sortant d'un poste de travail (appelé « poste amont ») est directement lié au flux de production entrant du poste de travail suivant (appelé « poste aval »). L'ensemble des opérations de la chaîne de production nécessite alors des flux équilibrés entre les postes de travail et en chaque instant pour une efficacité optimale. Généralement, des asynchronismes, tels que des aléas ou des pannes, survenant au niveau des postes de travail viennent perturber le bon fonctionnement de la chaîne de production en entraînant une désynchronisation des flux de production au sein de la chaîne de production. Selon un exemple, lors d'un arrêt subit du flux de production entrant du poste aval, en raison notamment d'une panne d'une machine, le flux sortant du poste amont est également arrêté à cause d'une accumulation d'objets à la sortie du poste amont. Cela entraîne l'arrêt forcé du poste amont. Par propagation du phénomène, l'arrêt d'un poste aval peut ainsi provoquer l'arrêt de l'ensemble de la chaîne de production située en amont, ce qui nuit à l'efficacité de la chaîne de production. Certaines opérations de production nécessitent aussi que plusieurs objets soient simultanément mis à disposition, comme c'est le cas pour des opérations d'assemblage. Le flux entrant d'un tel poste d'assemblage est donc directement lié aux flux de production sortants de différents postes amont disposés en parallèle. Un aléa survenant sur l'un des postes amont entraîne l'interruption du flux sortant du poste amont. Cela génère une attente au niveau du poste d'assemblage, provoquant une accumulation d'objets en sortie des autres postes amont. Un aléa peut ainsi entraîner un arrêt forcé de plusieurs lignes parallèles dans la chaîne de production. Selon un autre exemple, un asynchronisme entre poste amont et poste aval est simplement dû à des cadences différentes, e.g., non régulières, entre le poste amont et le poste aval.

Le document JP H07 178652 A décrit un procédé de stockage dans une chaîne de production dans lequel un nombre d'objets est compté dans une zone tampon. Lorsque le nombre d'objets est inférieur à un seuil, le transport d'objets d'une zone de chargement amont est poursuivi, lorsque le nombre d'objets atteint le seuil, le transport est arrêté.

Le document EP 1 967 928 A2 décrit un procédé de contrôle dans une chaîne de production comportant une étape de détermination si un objet situé dans une zone de production doit accéder à une zone de stockage suivante.

Le document JP 2013 254261 A décrit un procédé de stockage dans une chaîne de production dans lequel une zone tampon est située entre deux zones de production, un opérateur effectuant une tâche dans la première zone de production jusqu'à ce qu'un certain nombre d'objets soit présent dans la zone tampon, puis effectue une tâche dans la deuxième zone de production.

Le document de l'épreuve A de l'Examen Européen de Qualification 2015 décrit un tapis de détection de personnes comportant des capteurs et destiné à émettre une alarme lorsqu'une personne exerce une force sur un capteur en marchant sur le tapis.

Il est souhaitable de fournir une solution qui permette de stocker, en dehors du flux de production, des objets accumulés.

Il est par ailleurs souhaitable de fournir une solution qui permette de maintenir le fonctionnement d'un poste amont lorsqu'une désynchronisation entre le flux sortant du poste amont et le flux entrant du poste aval génère une accumulation d'objets.

Il est de plus souhaitable de fournir une solution qui permette, lors d'une reprise du flux entrant du poste aval, de réapprovisionner le poste aval de manière ordonnée et automatique.

Il est notamment souhaitable de fournir une solution qui respecte, lors de la reprise du flux entrant du poste aval, un ordre d'arrivée des objets en sortie du poste amont, sans qu'un opérateur n'ait à devoir mémoriser cet ordre d'arrivée des objets ni à se soucier à classer de manière ordonnée lesdits objets le temps de désynchronisation.

Il est notamment souhaitable de fournir une solution qui permette de réordonner des objets qui sont arrivés de manière désordonnée depuis le poste aval.

Il est aussi souhaitable de fournir une solution qui permette de maintenir en fonctionnement le poste amont et le poste aval alors qu'un asynchronisme existe entre ledit poste amont et ledit poste aval.

### EXPOSE DE L'INVENTION

L'invention concerne un procédé de stockage temporaire d'objets dans un système de stockage temporaire comportant un tapis de stockage temporaire, une unité de contrôle et des moyens de signalisation. Le tapis de stockage temporaire comporte une pluralité de capteurs régulièrement répartis, la position de chaque capteur sur le tapis de stockage temporaire étant distinctement identifiée. Le procédé de stockage temporaire comporte une phase de chargement dans laquelle l'unité de contrôle effectue les étapes suivantes : lorsqu'un objet est déposé sur le tapis de stockage temporaire, l'unité de contrôle réceptionne des informations correspondantes en provenance d'au moins un des capteurs, et pour chaque dépôt d'objet détecté, l'unité de contrôle enregistre une trace du dépôt de l'objet en association avec une référence à chacun des capteurs activés par le dépôt de l'objet. Le procédé de stockage temporaire comporte une phase de déchargement dans laquelle l'unité de contrôle détermine une séquence d'enlèvement indiquant l'ordre dans lequel les objets déposés sur le tapis de stockage temporaire doivent être enlevés, et pour chaque objet à enlever dans l'ordre de la séquence d'enlèvement, l'unité de contrôle identifie les capteurs référencés qui ont été activés par le dépôt de l'objet dans le cadre de la phase de chargement, transmet aux moyens de signalisation des informations de signalisation identifiant la position de l'objet à enlever à partir des capteurs identifiés, et lorsque l'objet est retiré du tapis de stockage temporaire, l'unité de contrôle réceptionne des informations correspondantes en provenance d'au moins un des capteurs, et poursuit la séquence d'enlèvement avec un nouvel objet à enlever, s'il existe. Ainsi, il est possible de stocker temporairement des objets en dehors d'un flux de production et de récupérer ensuite ces objets dans un ordre prédéfini sans avoir à se soucier de l'endroit où sont temporairement placés les objets.

Selon un mode particulier de réalisation, dans la phase de chargement, l'enregistrement d'une trace du dépôt de l'objet est effectué en association avec un rang de dépôt, et dans la phase de déchargement, la séquence d'enlèvement est définie en fonction des rangs de dépôt d'objets. Ainsi, l'ordonnancement des objets dans le flux de production est aisément géré.

Selon un mode particulier de réalisation, la phase de déchargement comporte en outre, suite à la détection de l'absence de l'objet à enlever par au moins un des capteurs, une vérification s'il y a correspondance entre les capteurs référencés en association avec le dépôt de l'objet et les capteurs ayant détecté l'absence de l'objet, et en cas de vérification négative, un déclenchement d'une alarme. Ainsi, l'unité de contrôle indique une erreur commise lors de l'enlèvement d'un objet dans un ordre différent que celui défini par la séquence d'enlèvement et il est alors possible de corriger l'erreur.

Selon un mode particulier de réalisation, l'alarme déclenchée en cas de vérification négative indique de reposer l'objet ayant été enlevé par erreur. Les capteurs activés par le re-dépôt de l'objet sont référencés en association avec la trace du dépôt de l'objet ayant été enlevé par erreur et en remplacement des capteurs référencés précédemment en association avec la trace du dépôt dudit objet. Ainsi, lorsqu'un objet est enlevé par erreur puis redéposé à un autre emplacement sur le tapis de stockage temporaire, les moyens de signalisation peuvent correctement indiquer le nouvel emplacement de l'objet lorsque ledit objet doit être enlevé à son tour.

Selon un mode particulier de réalisation de l'invention, la séquence d'enlèvement déterminée suit une méthode FIFO. Ainsi, il est possible de réintégrer aisément les objets stockés dans une chaîne de production dans le même ordre que l'ordre dans lequel les objets ont été sortis de la chaîne de production.

Selon un mode particulier de réalisation de l'invention, la phase de chargement et la phase de déchargement sont effectuées en parallèle par l'unité de contrôle. Ainsi, il est possible de réguler un asynchronisme dans une chaîne de production.

Selon un mode de réalisation particulier de l'invention, l'unité de contrôle calcule une position sur le tapis de stockage temporaire de chaque objet déposé et les informations de signalisation indiquent la position calculée de l'objet de sorte qu'un robot puisse décharger l'objet à partir de la position calculée. Ainsi, la position d'un objet peut être transmise à un robot qui peut alors déterminer puis effectuer un déplacement permettant de récupérer l'objet. L'enlèvement des objets est ainsi aisément réalisé de manière automatique.

L'invention concerne également un programme d'ordinateur comportant un ensemble d'instructions causant l'exécution, par un processeur, du procédé de stockage temporaire susmentionné, lorsque ledit programme d'ordinateur est exécuté par ledit processeur. L'invention concerne également un support de stockage d'informations stockant un tel programme d'ordinateur.

L'invention concerne également un système de stockage temporaire d'objets comportant un tapis de stockage temporaire, une unité de contrôle et des moyens de signalisation. Le tapis de stockage temporaire comporte une pluralité de capteurs régulièrement répartis, la position de chaque capteur sur le tapis de stockage temporaire étant distinctement identifiée. Le système de stockage temporaire comporte, dans une phase de chargement, lorsqu'un objet est déposé sur le tapis de stockage temporaire, des moyens pour réceptionner des informations correspondantes en provenance d'au moins un des capteurs, et, pour chaque dépôt d'objet détecté, des moyens pour enregistrer une trace du dépôt de l'objet en association avec une référence à chacun des capteurs activés par le dépôt de l'objet. Le système de stockage temporaire comporte, dans une phase de déchargement, des moyens pour déterminer une séquence d'enlèvement indiquant l'ordre dans lequel les objets déposés sur le tapis de stockage temporaire doivent être enlevés. Le système de stockage temporaire comporte en outre dans la phase de déchargement, pour chaque objet à enlever dans l'ordre de la séquence d'enlèvement, des moyens pour identifier les capteurs référencés qui ont été activés par le dépôt de l'objet dans le cadre de la phase de chargement, des moyens pour transmettre aux moyens de signalisation des informations de signalisation identifiant la position de l'objet à enlever à partir des capteurs identifiés, et lorsque l'objet est retiré du tapis de stockage temporaire, des moyens pour réceptionner des informations correspondantes en provenance d'au moins un des capteurs, et poursuivre la séquence d'enlèvement avec un nouvel objet à enlever, s'il existe.

Selon un mode particulier de réalisation de l'invention, les moyens de signalisation comportent un dispositif d'éclairage intégré au tapis de stockage temporaire, le dispositif d'éclairage comportant au moins une lampe identifiant l'emplacement de chaque capteur. Ainsi, un opérateur humain peut aisément identifier l'emplacement d'un objet signalé directement sur le tapis de stockage temporaire.

Selon un mode particulier de réalisation de l'invention, les moyens de signalisation comportent un écran d'affichage comportant au moins une zone de signalisation représentant l'emplacement de chaque capteur. Ainsi, un opérateur humain peut, depuis un écran, aisément identifier l'emplacement d'un objet signalé.

Selon un mode particulier de réalisation de l'invention, chaque capteur du système de stockage temporaire est connecté à l'unité de contrôle grâce à une piste, et le tapis de stockage temporaire comporte cinq couches superposées dans l'ordre suivant : une première couche de blindage, une première couche d'isolation, une couche centrale conductrice formant les capteurs et les pistes, une deuxième couche d'isolation et une deuxième couche de blindage. Ainsi, les capteurs sont surveillés indépendamment les uns des autres par l'unité de contrôle et l'intégration des capteurs dans le tapis de stockage temporaire est aisée et peu coûteuse.

Selon un mode particulier de réalisation de l'invention, l'unité de contrôle comporte un processeur exécutant le programme d'ordinateur susmentionné et comporte en outre un microcontrôleur dans le tapis de stockage temporaire qui exécute un logiciel embarqué effectuant des mesures et un filtrage des signaux détectés par chaque capteur, de sorte à détecter l'activation et la désactivation de chaque capteur. Ainsi, le système de stockage temporaire peut être facilement intégré à un système de contrôle d'une chaîne de production.

L'invention concerne également une chaîne de production comportant un système de stockage temporaire et comportant en outre un poste de production amont et un poste de production aval. La chaîne de production comporte des moyens pour transmettre à l'unité de contrôle une commande de démarrage de la phase de chargement, de telle sorte que lorsqu'un asynchronisme survient entre le poste de production amont et le poste de production aval ou lorsqu'un désordonnancement survient sur le poste de production amont et qu'un objet est déposé sur le tapis de stockage temporaire, l'unité de contrôle détecte la présence de l'objet. Lorsque l'asynchronisme ou respectivement le désordonnancement disparaît, la chaîne de production transmet à l'unité de contrôle une commande de démarrage de la phase de déchargement. Ainsi, le fonctionnement du poste amont peut être maintenu grâce au stockage des objets accumulés et le poste aval est approvisionné en objets de manière ordonnée et automatique.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un tapis de stockage temporaire en vue de dessus ;
[Fig. 2A] illustre schématiquement un système de stockage temporaire dans lequel s'inscrit le tapis de stockage temporaire ;
[Fig. 2B] illustre schématiquement une chaîne de production comportant le système de stockage temporaire ;
[Fig. 3A] illustre schématiquement des moyens de signalisation du système de stockage temporaire, selon un premier mode de réalisation ;
[Fig. 3B] illustre schématiquement les moyens de signalisation du système de stockage temporaire, selon un second mode de réalisation ;
[Fig. 4] illustre schématiquement les moyens de signalisation du système de stockage temporaire, selon un troisième mode de réalisation ;
[Fig. 5] illustre schématiquement un procédé de détection d'objets ;
[Fig. 6] illustre schématiquement un procédé d'assistance à l'enlèvement ordonné d'objets ;
[Fig. 7] illustre schématiquement un procédé de détection d'objets dans un mode de réalisation particulier de la présente invention ;
[Fig. 8] illustre schématiquement un agencement de cinq couches superposées, pour câbler des capteurs du tapis de stockage temporaire, dans un mode de réalisation particulier de la présente invention ; et
[Fig. 9] illustre schématiquement un exemple d'architecture matérielle d'une unité de contrôle du système de stockage temporaire.

### EXPOSE DETAILLE DE MODES DE REALISATION

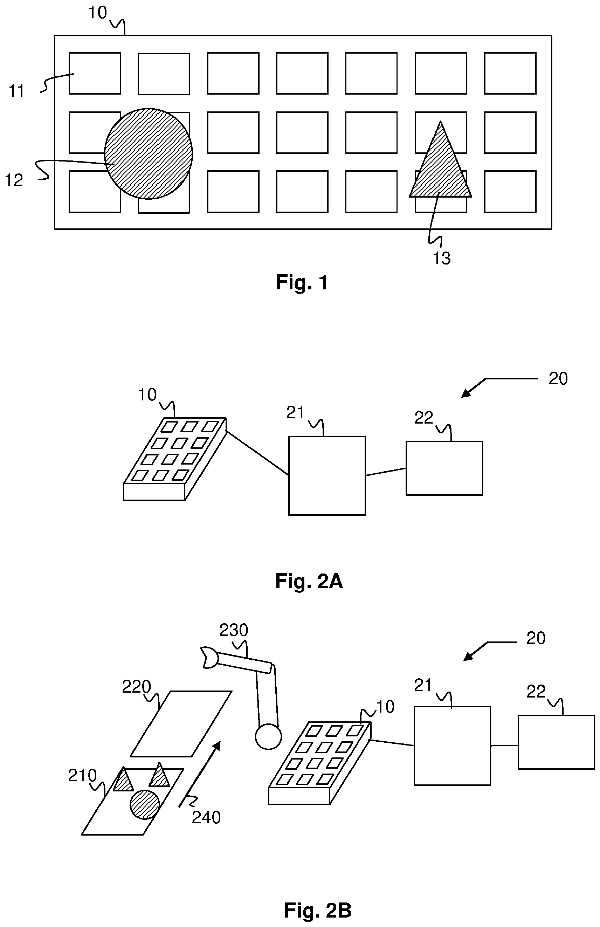

La **Fig. 1** montre un tapis de stockage temporaire 10 en vue de dessus. Le tapis de stockage temporaire 10 comporte des capteurs 11 intégrés au tapis de stockage temporaire 10 et régulièrement répartis sur le tapis de stockage temporaire 10. La position de chaque capteur 11 sur le tapis de stockage temporaire 10 est distinctement identifiée et différente de la position de chacun des autres capteurs 11.

Des objets 12, 13 peuvent être déposés sur le tapis de stockage temporaire 10, par exemple par un opérateur ou un robot. Chaque capteur 11 est sensible à la présence d'un objet 12, 13 lorsque ledit objet 12, 13 est déposé dans une zone de sensibilité dudit capteur 11. Dès lors que l'objet 12, 13 est déposé sur le tapis de stockage temporaire 10 et entre dans la zone de sensibilité dudit capteur 11, ledit capteur 11 est activé par l'objet 12, 13 dont ledit capteur 11 détecte le dépôt. Le capteur 11 est alors apte à transmettre une information représentative de la détection de présence de l'objet 12, 13. Inversement, le capteur 11 détecte l'absence de l'objet 12, 13 préalablement déposé dès lors que l'objet 12, 13 sort intégralement de la zone de sensibilité dudit capteur 11. On dit alors que ledit capteur 11 est désactivé.

Les capteurs 11 peuvent par exemple être de type résistif et sont alors sensibles à la pression qui est exercée par l'objet 12, 13. La zone de sensibilité de ces capteurs 11 est alors définie comme l'espace autour desdits capteurs 11, et plus précisément en surface du tapis de stockage temporaire 10, dans lequel lesdits capteurs 11 détectent une modification de pression supérieure à un seuil prédéfini lorsqu'un objet y est déposé. Un capteur 11 de type résistif est une résistance variable, dont la variation dépend de la pression appliquée, qui est couplée en série avec une autre résistance de façon à former un pont diviseur de tension. Un convertisseur analogique-numérique mesure la variation de tension du pont diviseur, et permet de mesurer la variation de pression appliquée au capteur 11.

Les capteurs 11 peuvent en variante être de type capacitif : le phénomène physique exploité est d'ordre électrostatique. Les capteurs 11 sont sensibles à la taille de la surface et donc à la forme de l'objet 12, 13, ainsi qu'à la conductivité du matériau de l'objet 12, 13. La zone de sensibilité de ces capteurs 11 est alors définie comme l'espace autour desdits capteurs 11 dans lequel lesdits capteurs 11 détectent une modification de champ électromagnétique supérieure à un seuil prédéfini lorsqu'un objet y est déposé. L'activation d'un capteur 11 de type capacitif se produit lorsque l'objet 12, 13 se trouve donc à une distance suffisamment proche du capteur 11, ce qui permet éventuellement de recouvrir le tapis de stockage temporaire 10 d'un film ou d'une couche de protection, par exemple en caoutchouc, sans altérer les capacités de détection dudit capteur 11.

La **Fig. 2A** illustre un système de stockage temporaire 20. Le système de stockage temporaire 20 comporte le tapis de stockage temporaire 10, une unité de contrôle 21 et des moyens de signalisation 22.

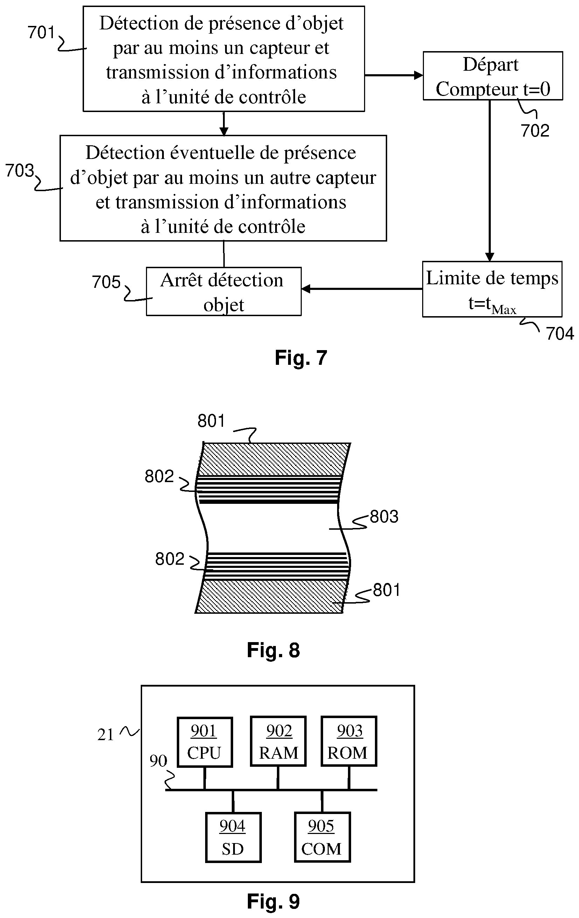

L'unité de contrôle 21 est reliée aux capteurs 11 et aux moyens de signalisation 22. L'unité de contrôle 21 sert à contrôler et coordonner le système de stockage temporaire 20. L'unité de contrôle 21 peut être un composant, ou un ensemble de composants interconnectés, ou un processeur exécutant un logiciel, ou un ensemble de processeurs exécutant des logiciels respectifs coopérant pour contrôler et coordonner le système de stockage temporaire 20. Cet aspect est notamment abordé ci-après en relation avec la Fig. 9.

Dans un mode de réalisation particulier, l'unité de contrôle 21 s'articule autour d'un processeur exécutant un logiciel applicatif, par exemple un ordinateur connecté au tapis de stockage temporaire 10. L'unité de contrôle 21 comporte en outre un microcontrôleur dans le tapis de stockage temporaire 10 relié au processeur et son logiciel applicatif, par exemple en utilisant une connexion sans-fil (e.g., de type Bluetooth ou de type WiFi) ou filaire (e.g., de type USB (« Universal Serial Bus » en anglais). Ce microcontrôleur exécute un logiciel embarqué qui effectue des mesures et un filtrage des signaux détectés par chaque capteur 11, de manière à détecter l'activation et la désactivation de chaque capteur 11. L'ensemble des capteurs 11 est scanné par le microcontrôleur afin d'extraire un état courant (activé ou désactivé) pour chaque capteur 11. Une acquisition correspond à un nombre déterminé de scans identiques successifs. Pour chaque acquisition, le microcontrôleur identifie chaque capteur 11 dont l'état (activé ou désactivé) a changé par rapport à la précédente acquisition. L'unité de contrôle 21 peut comporter de plus un agent de messagerie (ou « broker » en anglais), utilisant par exemple un protocole MQTT (« Message Queuing Telemetry Transport » en anglais, tel que défini dans le standard ISO/IEC PRF 20922), et qui permet de gérer les communications entre le microcontrôleur et son logiciel embarqué d'une part et le logiciel applicatif d'autre part. Un tel agent de messagerie permet de faire aisément interagir le système de stockage temporaire 20 avec d'autres éléments de contrôle d'une chaîne de production.

Les moyens de signalisation 22 fournissent des instructions de signalisation qui permettent d'identifier l'emplacement d'un objet sur le tapis de stockage temporaire 10. Selon le mode de réalisation, les moyens de signalisation 22 sont intégrés à l'unité de contrôle 21 ou externes à l'unité de contrôle 21. Deux familles de moyens de signalisation 22 existent selon que le système de stockage temporaire 20 collabore avec un robot ou que le système de stockage temporaire 20 est utilisé par un opérateur humain. Dans le cas où le système de stockage temporaire 20 collabore avec un robot, les moyens de signalisation 22 fournissent des instructions de signalisation compréhensibles par une machine et indiquent au robot la position à laquelle le robot doit récupérer un objet 12, 13 sur le tapis de stockage temporaire 10. Les moyens de signalisation 22 sont alors une interface de commande du robot. Le robot est typiquement piloté par un logiciel de pilotage qui reçoit les instructions de signalisation en provenance des moyens de signalisation 22 et ordonne le déplacement du robot en conséquence. Dans le cas d'une utilisation par un opérateur humain, les moyens de signalisation 22 sont des moyens de signalisation visuels, tels qu'un dispositif d'affichage, qui indiquent l'emplacement d'un objet 12, 13 à enlever. L'emplacement de l'objet 12, 13 est indiqué à l'aide de zones de signalisation, chaque zone de signalisation représentant ou indiquant une position sur le tapis de stockage temporaire 10, correspondant par exemple à la position d'un ou plusieurs capteurs 11. Les moyens de signalisation 22 visuels peuvent être un écran d'affichage, tel qu'un afficheur à LEDs (« light-emitting diodes » en anglais) ou un écran d'ordinateur, un dispositif d'éclairage intégré au tapis de stockage temporaire 10, par exemple à l'aide de LEDs.

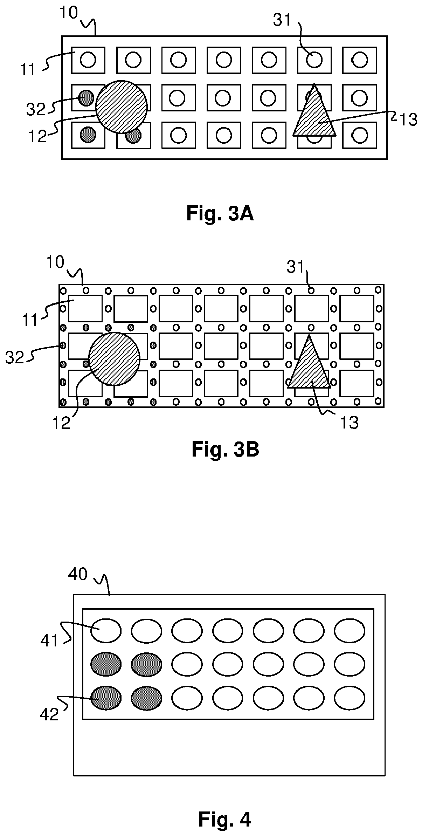

La Fig. 2A représente un cas où les moyens de signalisation 22 sont des moyens de signalisation visuels qui sont séparés du tapis de stockage temporaire 10, mais de tels moyens de signalisation visuels peuvent en variante être intégrés au tapis de stockage temporaire 10, comme par exemple représenté en Figs. 3A et 3B.

Le système de stockage temporaire 20 présente deux phases de fonctionnement : une phase de chargement et une phase de déchargement. Les deux phases peuvent être effectuées de manière séquentielle, la phase de chargement étant exécutée dans un premier temps et la phase de déchargement étant exécutée dans un second temps. Les deux phases peuvent en variante être effectuées en parallèle.

La phase de chargement permet de détecter des dépôts successifs d'objets sur le tapis de stockage temporaire 10 et ainsi de stocker temporairement des objets 12, 13. La phase de déchargement fournit à un opérateur ou un robot des indications permettant d'enlever dans un ordre prédéterminé des objets déposés sur le tapis de stockage temporaire 10. Lors de la phase de déchargement, les moyens de signalisation 22 indiquent l'ordre dans lequel les objets 12, 13 doivent être récupérés après stockage temporaire, pour être par exemple réintégrés dans une chaîne de production. Grâce à ces deux phases, le système de stockage temporaire 20 permet de stocker temporairement des objets sans se préoccuper de l'endroit où les objets en question sont successivement posés sur le tapis de stockage temporaire 10, et permet de récupérer ensuite les objets stockés dans le bon ordre en suivant les indications des moyens de signalisation 22.

Dans la phase de chargement, lorsqu'un objet, par exemple l'objet 12, est déposé sur le tapis de stockage temporaire 10, au moins un capteur 11 est activé par le dépôt de l'objet 12. Chaque capteur 11 qui détecte une entrée d'objet dans sa zone de sensibilité est activé par le dépôt de l'objet 12 et transmet une information représentative d'une activation, autrement dit d'une détection de présence d'objet à l'unité de contrôle 21. L'unité de contrôle 21 reçoit l'information représentative d'activation du ou des capteurs, enregistre une trace du dépôt d'objet en association à une référence à chaque capteur 11 activé par le dépôt de l'objet 12 et, préférentiellement, une information représentative d'un rang de dépôt. Dans un mode de réalisation particulier, et notamment dans le cas où le système de stockage temporaire collabore avec un robot, l'unité de contrôle 21 calcule en outre la position de l'objet 12 et enregistre la position calculée en association avec la trace du dépôt d'objet correspondant.

Lorsqu'un autre objet, par exemple l'objet 13, est ensuite déposé sur le tapis de stockage temporaire 10, le même processus se reproduit. Dans la phase de chargement, des objets sont déposés sur le tapis de stockage temporaire 10 selon une séquence de dépôt, chaque objet déposé ayant ainsi son propre rang dans la séquence de dépôt.

Dans la phase de déchargement, l'unité de contrôle 21 détermine une séquence d'enlèvement indiquant l'ordre dans lequel tous les objets 12, 13 déposés sur le tapis de stockage temporaire 10 doivent être enlevés. Dans l'ordre défini par la séquence d'enlèvement, l'unité de contrôle 21 identifie successivement chaque objet à enlever. Pour chaque objet à enlever, l'unité de contrôle 21 détermine une information de signalisation permettant d'identifier l'emplacement dudit objet. L'information de signalisation peut être différente selon que le système de stockage temporaire 20 collabore avec un robot ou que le système de stockage temporaire 20 est utilisé par un opérateur. L'information de signalisation peut comporter, selon les cas, la référence aux capteurs 11 activés par le dépôt de l'objet en question, une identification des zones de signalisation à activer, ou la position calculée de l'objet en question.

L'unité de contrôle 21 transmet ensuite l'information de signalisation aux moyens de signalisation 22. Les moyens de signalisation 22 indiquent alors au robot ou à l'opérateur par le biais d'instructions (instructions machine ou instructions visuelles) la position du prochain objet à déplacer.

Dans un mode de réalisation particulier, un logiciel applicatif de l'unité de contrôle 21 comporte deux tâches (« thread » en anglais) qui peuvent être exécutées en parallèle. La première tâche s'occupe de la phase de chargement, détecte en permanence des dépôts d'objets successifs et enregistre les traces des dépôts d'objets dans l'ordre des rangs de dépôts. La deuxième tâche s'occupe de la phase de déchargement et détermine une séquence d'enlèvement (par exemple en mode FIFO (« First In First Out » en anglais)) à partir des traces de dépôt d'objets enregistrées par la première tâche. Le deuxième programme détermine alors des informations de signalisation représentatives des emplacements des objets à enlever selon la séquence d'enlèvement, puis transmet successivement, et dans l'ordre défini par la séquence d'enlèvement, les informations de signalisation aux moyens de signalisation 22.

La **Fig. 2B** illustre une chaîne de production comportant le système de stockage temporaire 20, et également un poste de production amont 210 et un poste de production aval 220 qui se succèdent dans un sens 240 de flux de production.

Le système de stockage temporaire 20 permet alors de pallier un asynchronisme entre le flux de production au niveau du poste de production amont 210 et le flux de production au niveau du poste de production aval 220.

Dans un tel cas d'asynchronisme, une commande de démarrage de la phase de chargement est transmise à l'unité de contrôle 21. Par exemple, l'appui sur un bouton permettant d'identifier une machine en panne ou la détection par un détecteur d'une accumulation d'objets dans une zone de la chaîne de production entraînent la transmission d'une information à un système de contrôle de la chaîne de production. Le système de contrôle transmet alors la commande de démarrage de la phase de chargement à l'unité de contrôle 21. Un opérateur ou un robot 230 peut alors récupérer les objets en sortie du poste de production amont 210 et les déposer successivement sur le tapis de stockage temporaire 10, ce qui permet de libérer la sortie du poste de production amont 210. La commande de démarrage de la phase de chargement peut également être transmise à l'unité de contrôle 21 par anticipation d'un éventuel asynchronisme. L'unité de contrôle 21 se met alors simplement en attente d'un dépôt d'objet.

Dans le cas d'un fonctionnement séquentiel des phases de chargement et de déchargement, lorsque l'asynchronisme entre le flux de production amont et le flux de production aval disparaît, par exemple lors d'un redémarrage du poste de production aval 220, une commande de basculement de la phase de chargement vers la phase de déchargement est transmise à l'unité de contrôle 21. La commande de basculement peut être séparée en une commande d'arrêt de la phase de chargement et une commande suivante de démarrage de la phase de déchargement.

L'ordre défini par la séquence d'enlèvement peut être par exemple le même que l'ordre de la séquence de dépôt. Ainsi, l'arrêt ou la désorganisation du poste de production amont 210 est évité ainsi que ses conséquences sur l'ensemble de la chaîne de production. Cela permet de maintenir l'ordonnancement des objets dans le flux de production malgré l'activation du système de stockage temporaire 20. L'ordre défini par la séquence d'enlèvement peut également correspondre à un ordre différent de celui de la séquence de dépôt, comme par exemple l'ordre inverse ou un ordre indépendant de celui de la séquence de dépôt. Cela permet de réordonner les objets dans le flux de production, lorsque par exemple un incident d'ordonnancement est survenu en amont.

La **Fig. 3A** montre un mode de réalisation des moyens de signalisation 22, dans lequel un dispositif d'éclairage est intégré au tapis de stockage temporaire 10 et pour lequel chaque capteur 11 est identifié par une zone de signalisation matérialisée par une lampe 31, 32. Chacune des lampes 31, 32 présente deux états d'émission lumineuse distincts qui sont appelés « état activé » et « état désactivé » et est associée à un capteur 11. L'état activé permet de signaler l'emplacement d'un objet 12, 13 sur le tapis de stockage temporaire 10. Chaque lampe 31, 32 associée à un capteur 11 qui a été activé par le dépôt de l'objet 12, 13 en question est mise en état activé lorsque l'objet 12, 13 en question doit être signalé par les moyens de signalisation 22. Les états activé et désactivé de chaque lampe peuvent se distinguer de plusieurs manières selon les modes de réalisation. Par exemple, la lampe en état activé peut émettre un signal lumineux tandis que la lampe en état désactivé n'émet aucun signal lumineux, ou inversement. L'état activé d'une lampe peut également correspondre à une couleur d'émission lumineuse tandis que l'état désactivé correspond à une autre couleur d'émission lumineuse. Il est aussi possible que l'état activé corresponde à un clignotement tandis que l'état désactivé correspond à une émission lumineuse constante ou pas d'émission lumineuse.

Dans la phase de déchargement, lorsqu'un objet 12, 13 doit être enlevé, l'unité de contrôle 21 retrouve en mémoire des informations d'identification de chaque capteur 11 référencé en association avec la trace du dépôt de l'objet en question, autrement dit des informations d'identification de chaque capteur 11 préalablement activé lors du dépôt dudit objet dans le cadre de la phase de chargement. L'unité de contrôle 21 transmet ensuite aux moyens de signalisation 22 une information indiquant d'activer uniquement chaque lampe 32 correspondant à chaque capteur 11 préalablement activé lors du dépôt dudit objet dans le cadre de la phase de chargement.

La **Fig. 3B** montre un mode de réalisation des moyens de signalisation 22, dans lequel un dispositif d'éclairage est intégré au tapis de stockage temporaire 10 et pour lequel chaque capteur 11 est identifié par plusieurs zones de signalisation matérialisées par des lampes 31, 32 entourant ledit capteur 11 sur le tapis de stockage temporaire 10. Dans cet exemple, chaque capteur 11 est entouré de huit lampes 31, 32 (e.g., LED) et chaque lampe 31, 32 correspond à un, deux ou quatre capteurs 11 selon que la lampe 32 est placée à côté d'un, deux ou quatre capteurs 11 sur le tapis de stockage temporaire 10. Chacune des lampes 31, 32 peut être dans un état activé ou un état désactivé afin de signaler l'emplacement d'un objet 12, 13, comme décrit en Fig. 3A. Dans la phase de déchargement, lorsqu'un objet 12, 13 doit être enlevé, l'unité de contrôle 21 retrouve en mémoire des informations d'identification de chaque capteur 11 référencé en association avec la trace du dépôt de l'objet en question, autrement dit des informations d'identification de chaque capteur 11 préalablement activé lors du dépôt dudit objet dans le cadre de la phase de chargement. L'unité de contrôle 21 transmet alors aux moyens de signalisation 22 une information indiquant d'activer uniquement chaque lampe 32 de la zone de signalisation correspondant à chaque capteur 11 préalablement activé lors du dépôt dudit objet dans le cadre de la phase de chargement.

La **Fig. 4** montre un mode de réalisation des moyens de signalisation 22 dans lequel un afficheur 40 représente le tapis de stockage temporaire 10. La position de chaque capteur 11 sur le tapis de stockage temporaire est représentée par une ou plusieurs zones de signalisation 41, 42 de l'afficheur 40. Les zones de signalisation 41, 42 sont par exemple des LEDs qui peuvent être dans un état activé ou dans un état désactivé. Dans la phase de déchargement du système de stockage temporaire 20, lorsqu'un objet 12, 13 doit être enlevé, l'unité de contrôle 21 retrouve en mémoire les informations d'identification de chaque capteur 11 référencé en association avec la trace du dépôt de l'objet 12, 13 en question, transmet à l'afficheur 40 une information indiquant d'activer uniquement chaque zone de signalisation 42 correspondant à chaque capteur 11 préalablement activé lors du dépôt dudit objet dans le cadre de la phase de chargement.

Dans un mode de réalisation particulier, dans la phase de chargement, l'unité de contrôle 21 transmet aux moyens de signalisation 22 une information indiquant de signaler chaque capteur 11 activé lors d'un dépôt d'objet. De cette manière, lors de chaque dépôt d'objet, l'emplacement de l'objet déposé est signalé. Des LED de couleurs différentes peuvent par exemple être utilisées pour distinguer une signalisation faite lors de la phase de chargement d'une signalisation faite lors de la phase de déchargement. Cela permet à l'opérateur de vérifier que l'objet a bien été détecté par le système de stockage temporaire 20.

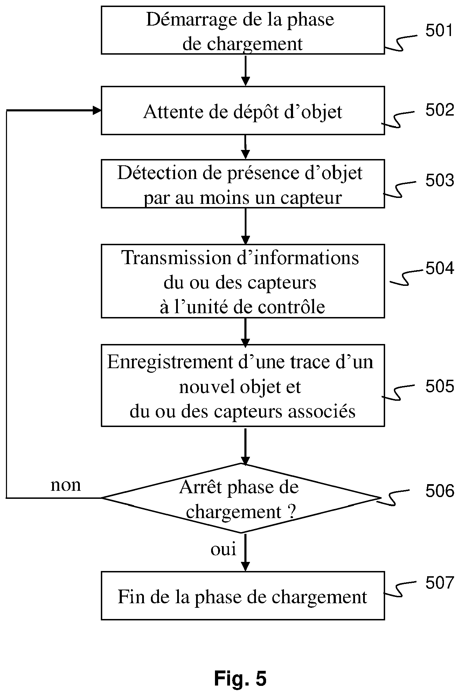

La **Fig. 5** représente schématiquement un procédé de détection d'objets implémenté par le système de stockage temporaire 20 dans la phase de chargement.

Dans une première étape 501, l'unité de contrôle 21 reçoit une commande de démarrage de la phase de chargement, suite par exemple à l'arrêt du poste de production aval 220 ou en anticipation d'un éventuel asynchronisme.

Dans une étape 502, l'unité de contrôle 21 se met en attente de dépôt d'un objet sur le tapis de stockage temporaire 10. Un objet 12, 13 peut alors être déposé sur le tapis de stockage temporaire 10, par exemple par l'opérateur ou le robot 230.

Lorsqu'un objet, par exemple l'objet 12, est déposé sur le tapis de stockage temporaire 10, la présence de l'objet en question est détectée dans une étape 503 par l'activation d'au moins un capteur 11 situé dans la zone de dépôt dudit objet 12.

Dans une étape 504, l'unité de contrôle 21 reçoit une information représentative d'une détection de présence de l'objet 12 transmise par chaque capteur 11 activé par le dépôt de l'objet 12.

Dans une étape 505, l'unité de contrôle 21 répertorie la présence de l'objet 12 par l'enregistrement d'une trace du dépôt dudit objet 12, en association avec une référence à chaque capteur 11 activé par le dépôt de l'objet 12, ainsi que préférentiellement une information représentative du rang de dépôt de l'objet 12. Le rang de dépôt d'un objet peut être enregistré par exemple sous la forme d'un horodatage, ou par le biais d'un compteur dont la valeur est incrémentée à chaque nouveau dépôt d'objet, ou implicitement par le biais d'une liste chaînée des dépôts. L'enregistrement de la référence à chaque capteur 11 activé par le dépôt de l'objet 12 comporte une identification (e.g., la position sur le tapis de stockage temporaire 10) de chaque capteur 11 sur le tapis de stockage temporaire 10 qui a été activé par le dépôt de l'objet 12. Dans un mode de réalisation particulier, l'enregistrement de la référence à chaque capteur 11 activé par le dépôt de l'objet 12 comporte également des valeurs de grandeurs physiques mesurées par ledit capteur.

Dans un mode de réalisation particulier, l'unité de contrôle 21 identifie, pour chaque dépôt d'objet, s'il y a une incohérence entre l'identification du ou des capteurs 11 activés par le dépôt d'objet et certains paramètres prédéfinis tels que la forme ou la taille de l'objet. C'est le cas par exemple lorsque seulement trois capteurs 11 ont détecté la présence d'un même objet et que la forme dudit objet implique que l'objet en question soit positionné dans la zone de sensibilité d'un quatrième capteur 11. Lorsque c'est le cas, l'unité de contrôle 21 identifie la configuration la plus probable de capteurs 11 supposés être activés par le dépôt d'objet en question et modifie les références aux capteurs 11 enregistrées en association avec la trace du dépôt d'objet en tenant compte de ladite configuration.

Dans un mode de réalisation particulier, l'unité de contrôle 21 calcule en outre la position de l'objet 12, par exemple sous forme de coordonnées du barycentre de la surface de contact supposée de l'objet avec le tapis de stockage temporaire 10 dans un repère prédéfini, et enregistre la position dudit objet 12 en association avec la trace du dépôt de l'objet 12. Le calcul de la position de l'objet 12 est effectué en tenant compte de l'identification de chaque capteur activé par le dépôt de l'objet 12 et éventuellement de paramètres prédéfinis tels que la forme et les dimensions de l'objet 12. Des calculs de conversion des coordonnées entre différents repères peuvent également être effectués.

Dans une étape 506 suivante, l'unité de contrôle 21 vérifie si une commande d'arrêt de la phase de chargement a été reçue, par exemple suite à la reprise du poste de production aval 220. Si tel est le cas, une étape 507 est effectuée. Sinon, le procédé est réitéré à partir de l'étape 502 et l'unité de contrôle 21 se met en attente d'un nouveau dépôt d'objet. Par exemple, si l'objet 13 est ensuite déposé, le ou les capteurs 11 situés dans la zone de dépôt de l'objet 13 sont activés dans l'étape 503 et les étapes 504 à 506 sont réitérées.

Dans l'étape 507, la phase de chargement est arrêtée.

A noter que si l'unité de contrôle 21 reçoit une commande d'arrêt de la phase de chargement pendant l'étape 502, l'étape 507 est alors effectuée.

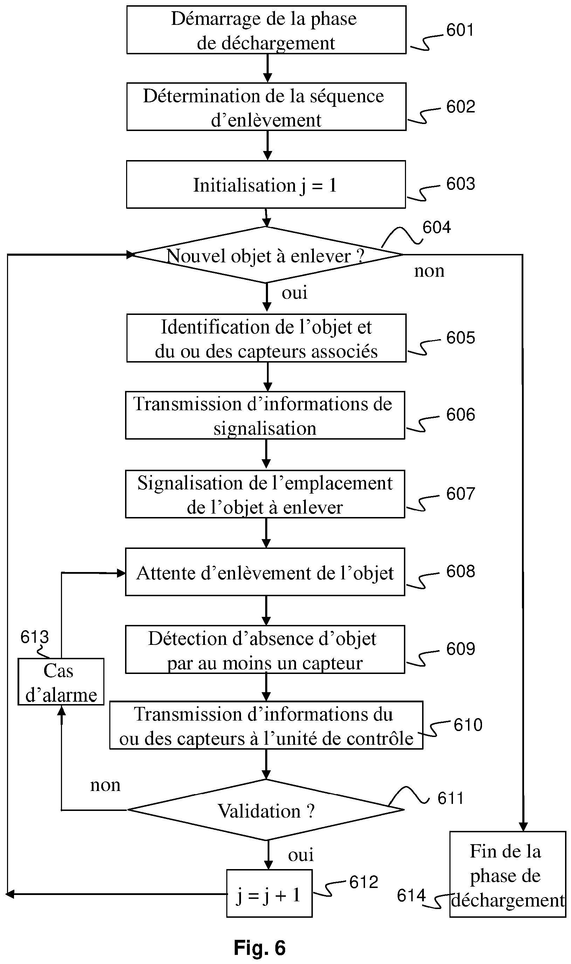

La **Fig. 6** représente schématiquement un procédé d'enlèvement ordonné d'objets implémenté par le système de stockage temporaire 20 dans la phase de déchargement. Dans une étape 601, l'unité de contrôle 21 reçoit une commande de démarrage de la phase de déchargement. La commande de démarrage de la phase de déchargement peut être, pour un fonctionnement séquentiel des phases de chargement et déchargement, une commande de basculement de la phase de chargement vers la phase de déchargement. Dans un fonctionnement parallèle des phases de chargement et déchargement, la commande de démarrage de la phase de déchargement peut être reçue en même temps que la commande de démarrage de la phase de chargement. Dans une étape 602, la séquence d'enlèvement est déterminée par l'unité de contrôle 21 à partir d'au moins une règle prédéfinie et assigne à chaque trace de dépôt d'objet enregistré un rang d'enlèvement. La séquence d'enlèvement peut par exemple suivre une méthode FIFO (pour « First In First Out » en anglais, signifiant « premier arrivé, premier sorti ») et les objets sont rangés dans la séquence d'enlèvement dans le même ordre que la séquence de dépôt. Dans ce cas, la règle prédéfinie indique à l'unité de contrôle 21 de déterminer la séquence d'enlèvement en commençant par le premier objet déposé et en parcourant les objets déposés dans l'ordre de leur rang de dépôt. La séquence d'enlèvement peut en variante suivre une méthode LIFO (pour « Last In Last Out » en anglais, signifiant « premier arrivé, dernier sorti »). Dans une autre variante, la séquence d'enlèvement est indépendante de la séquence de dépôt. La séquence d'enlèvement est alors déterminée par exemple en fonction d'autres paramètres déterminés lors du dépôt des objets (tels que leur masse, leur surface au sol...) en fonction de grandeurs physiques mesurées par les capteurs 11. Dans un mode de réalisation particulier, un déséquencement d'objets antérieur au stockage est identifié dans la chaîne de production. La séquence d'enlèvement est alors déterminée à partir d'au moins une règle reçue par l'unité de contrôle 21 en provenance d'un système de contrôle de la chaîne de production, afin de reséquencer les objets déposés sur le tapis de stockage temporaire 10.

Dans le cas d'un fonctionnement parallèle des phases de chargement et déchargement, l'unité de contrôle 21 identifie dans un premier temps s'il existe au moins une trace de dépôt d'objet enregistrée dans le cadre de la phase de chargement et récupère le ou les enregistrements correspondants.

Dans une étape 603, l'unité de contrôle 21 initialise la séquence d'enlèvement, par exemple en affectant une valeur « 1 » à une variable incrémentale j.

Dans une étape 604 suivante, l'unité de contrôle 21 vérifie s'il reste au moins un objet à enlever du tapis de stockage temporaire 10. Si c'est le cas, une étape 605 est effectuée. Sinon, dans un fonctionnement séquentiel des phases de chargement et déchargement, une étape 614 est effectuée, tandis que dans un fonctionnement parallèle des phases de chargement et déchargement, l'unité de contrôle 21 se met en attente de l'enregistrement d'une nouvelle trace de dépôt d'objet dans le cadre de la phase de chargement.

Dans l'étape 605, l'unité de contrôle 21 identifie les capteurs 11 qui ont été activés par le dépôt de l'objet de rang d'enlèvement j dans le cadre de la phase de chargement. En variante, l'unité de contrôle 21 identifie les zones de signalisation correspondant auxdits capteurs 11 ou identifie la position calculée de l'objet en question, enregistrée en association avec la trace du dépôt dudit objet.

Dans une étape 606, l'unité de contrôle 21 détermine une information de signalisation permettant de signaler l'emplacement de l'objet de rang d'enlèvement j : l'information de signalisation comporte l'identification des capteurs 11 référencés en association avec la trace du dépôt de l'objet de rang j. En variante, l'information de signalisation comporte une identification des zones de signalisation à activer. Dans une autre variante, et notamment dans le cas où le système de stockage temporaire 20 collabore avec le robot 230, l'information de signalisation comporte la position calculée de l'objet en question. L'unité de contrôle 21 transmet l'information de signalisation de sorte que les moyens de signalisation 22 puissent activer les zones de signalisation 41, 42 ou les lampes 31, 32 correspondantes.

Dans une étape 607, les moyens de signalisation 22 signalent l'emplacement de l'objet de rang d'enlèvement j, en respectant l'information de signalisation. Dans un mode de réalisation particulier dans lequel le système de stockage temporaire 20 collabore avec le robot 230, le robot 230 comporte un logiciel de pilotage qui reçoit l'information de signalisation transmise par les moyens de signalisation 22. Le logiciel de pilotage du robot 230 détermine alors lui-même le déplacement que le robot 230 doit effectuer pour enlever l'objet et le déposer dans un autre endroit prédéterminé.

Dans une étape 608, l'unité de contrôle 21 se met en attente de l'enlèvement de l'objet de rang d'enlèvement j. Lorsque ledit objet est enlevé, le ou les capteurs 11 activés par l'objet de rang d'enlèvement j dans le cadre de la phase de chargement détectent l'absence de l'objet en question dans une étape 609, et chaque capteur 11 détectant l'absence dudit objet transmet une information représentative de cette détection à l'unité de contrôle 21 dans une étape 610.

Dans une étape 611, l'unité de contrôle 21 vérifie si le ou les capteurs 11 ayant détecté l'absence de l'objet correspondent au ou aux capteurs 11 activés par le dépôt de l'objet de rang d'enlèvement j dans le cadre de la phase de chargement : s'il y a correspondance, l'enlèvement de l'objet de rang d'enlèvement j est validé, la trace de l'objet en question est supprimée et une étape 612 est effectuée. Sinon, une étape 613 est effectuée pendant laquelle un cas d'alarme est activé, puis l'étape 608 est réitérée et l'unité de contrôle 21 se remet en attente de l'enlèvement de l'objet de rang d' enlèvement j.

L'étape 613 consiste par exemple en ce que l'unité de contrôle 21 émet un message d'erreur indiquant que l'enlèvement de l'objet est incorrect et que l'objet enlevé par erreur doit être reposé. Dans un mode de réalisation particulier, l'unité de contrôle 21 définit et transmet aux moyens de signalisation 22 des informations de signalisation indiquant l'emplacement où l'objet enlevé par erreur doit être reposé. L'unité de contrôle 21 collecte des informations représentatives de la détection de présence de l'objet par les capteurs 11, activés par dépôt de l'objet enlevé par erreur. L'unité de contrôle 21 transmet ensuite aux moyens de signalisation 22 l'information de signalisation précédemment déterminée à l'étape 606. Les moyens de signalisation 22 indiquent alors l'emplacement de l'objet de rang d'enlèvement j de la même manière que lors de l'étape 607 précédente. L'unité de contrôle 21 réitère ensuite l'étape 608. Dans un autre mode de réalisation particulier de l'étape 613, l'unité de contrôle 21 identifie le rang de l'objet enlevé par erreur en identifiant à quelle trace de dépôt d'objet enregistrée sont associés les capteurs 11 ayant détecté l'absence de l'objet enlevé par erreur. L'unité de contrôle 21 émet alors un message d'erreur indiquant simplement de reposer l'objet. Lorsque l'objet enlevé par erreur est reposé, l'identification des capteurs 11 associée à la trace de l'objet enlevé par erreur est alors remplacée par l'identification des capteurs 11 activés par le re-dépôt de l'objet en question. En variante, les zones de signalisation correspondant auxdits capteurs 11, ou la nouvelle position calculée de l'objet en question, peuvent être enregistrées en remplacement respectivement des zones de signalisation précédemment associées à la trace du dépôt d'objet ou de la position calculée précédente de l'objet. L'unité de contrôle 21 transmet ensuite aux moyens de signalisation 22 l'information de signalisation précédemment déterminée à l'étape 606. Les moyens de signalisation 22 indiquent alors l'emplacement de l'objet de rang d'enlèvement j de la même manière que lors de l'étape 607 précédente. L'unité de contrôle 21 réitère ensuite l'étape 608. Dans l'étape 612, l'unité de contrôle 21 identifie le rang d'enlèvement suivant dans la séquence d'enlèvement, par exemple par incrémentation de la variable j. Dans un fonctionnement parallèle des phases de chargement et déchargement, l'unité de contrôle 21 identifie et récupère au préalable une ou plusieurs traces éventuelles de dépôts d'objets enregistrées dans le cadre de la phase de chargement de la même manière qu'à l'étape 602 et détermine la suite de la séquence d'enlèvement.

L'étape 604 est alors réitérée en prenant en compte le nouveau rang d'enlèvement j.

Dans l'étape 614, exécutée dans le cas d'un fonctionnement séquentiel des phases de chargement et déchargement, la séquence d'enlèvement est terminée et l'unité de contrôle 21 termine la phase de déchargement. Le système de stockage temporaire 20 est alors mis en veille, débrayé ou stoppé. Le système de stockage temporaire 20 peut en variante repasser dans la phase de chargement si une commande de démarrage de la phase de chargement a été reçue par l'unité de contrôle 21.

La **Fig. 7** illustre un procédé de détection d'un même objet par plusieurs capteurs 11 correspondant à un mode de réalisation particulier de l'ensemble des étapes 503 et 504 du procédé de détection ordonnée d'objets représenté en Fig. 5.

Lorsqu'un objet, comme par exemple l'objet 12, est déposé sur le tapis de stockage temporaire 10, l'objet en question peut être détecté par plusieurs capteurs 11. Dans un premier cas, les capteurs 11 sont activés simultanément par l'objet en question et transmettent en même temps une information représentative de la détection de présence de l'objet en question à l'unité de contrôle 21. Dans un second cas, les capteurs 11 ne sont pas activés en même temps par l'objet en question, par exemple si ledit objet n'est pas directement déposé à plat. Grâce à l'algorithme de la Fig. 7, l'ensemble des capteurs 11 détectant un même objet 12, 13 sont enregistrés en association avec la même trace de dépôt d'objet, même lorsque l'activation n'est pas simultanée.

Dans une étape 701, au moins un premier capteur 11 est activé par un dépôt d'objet, par exemple l'objet 12, et transmet une information représentative de la détection de présence de l'objet 12 à l'unité de contrôle 21. Une étape 702 est alors effectuée pendant laquelle l'unité de contrôle 21 démarre un compteur de temps.

Dans une étape 703, au moins un deuxième capteur 11 différent du premier capteur 11 est également activé par le dépôt de l'objet 12 et transmet une information représentative de la détection de présence à l'unité de contrôle 21. Chaque deuxième capteur 11 activé pendant l'étape 703 est référencé en association avec la trace du même dépôt d'objet que chaque premier capteur 11 activé à l'étape 701, autrement dit avec la trace du dépôt de l'objet 12. Lorsque le dépôt de l'objet 12 active un seul capteur 11, la détection de présence de l'objet 12 est effectuée uniquement à l'étape 701 et l'étape 703 ne se produit simplement pas.

Dans une étape 704, le compteur de temps atteint une limite de temps prédéfinie t_{MAX}. L'étape 704 entraîne immédiatement une étape 705, pendant laquelle la détection de l'objet 12 est arrêtée par l'unité de contrôle 21. L'arrêt de la détection de l'objet 12 consiste à arrêter d'associer les capteurs 11 activés par un dépôt d'objet à une même trace de dépôt d'objet. Si un troisième capteur 11 est activé après que la détection de l'objet 12 a été arrêtée dans l'étape 705, le troisième capteur 11 activé est référencé par l'unité de contrôle 21 en association avec la trace d'un nouveau dépôt d'objet.

La limite de temps prédéfinie t_{MAX} est déterminée de manière à être supérieure à une durée estimée de dépôt de tout objet susceptible d'être déposé sur le tapis de stockage temporaire 10 et inférieure à une durée minimale estimée entre deux dépôts d'objets successifs.

La **Fig. 8** illustre un agencement de cinq couches superposées, pour câbler des capteurs 11 dans un mode de réalisation particulier. Les deux couches externes 801 sont des couches de blindage, réalisées par exemple avec de l'encre conductrice à l'argent. Les deux couches intermédiaires 802 sont des couches d'isolation de pistes, qui peuvent être réalisées avec un vernis isolant. La couche centrale 803 est une couche conductrice, formant les capteurs 11 et des pistes permettant de relier les capteurs 11 à l'unité de contrôle 21. La couche centrale 803 est réalisée par exemple avec de l'encre conductrice à l'argent.

Le câblage est préférentiellement effectué avec une piste par capteur 11 et peut être combiné à un circuit de multiplexage analogique. Les capteurs 11 sont ainsi surveillés indépendamment les uns des autres par l'unité de contrôle 21.

La **Fig. 9** illustre schématiquement un exemple d'une architecture matérielle de l'unité de contrôle 21 selon un mode de réalisation particulier. L'unité de contrôle 21 comprend alors, reliés par un bus de communication 90 : un processeur ou CPU (« Central Processing Unit » en anglais) 901 ; une mémoire vive RAM (« Random Access Memory » en anglais) 902 ; une mémoire morte ROM (« Read Only Memory » en anglais) 903 ; une unité de stockage, telle qu'un disque dur, ou un lecteur de support de stockage, tel qu'un lecteur de cartes SD (« Secure Digital » en anglais) 904 ; au moins une interface de communication COM 905 permettant à l'unité de contrôle 21 de communiquer au moins avec le tapis de stockage temporaire 10 et les moyens de signalisation 22. Le processeur 901 est capable d'exécuter des instructions chargées dans la RAM 902 à partir de la ROM 903, d'une mémoire externe, d'un support de stockage (tel qu'une carte SD), ou d'un réseau de communication. Lorsque l'unité de contrôle 21 est mise sous tension, le processeur 901 est capable de lire de la mémoire RAM 902 des instructions et de les exécuter. Ces instructions forment un programme d'ordinateur causant l'implémentation complète ou partielle, par le processeur 901, des procédés décrits précédemment en relation avec les Figs. 5, 6 et 7. Les procédés décrits en relation avec les Figs. 5, 6 et 7 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais). D'une manière générale, l'unité de contrôle 21 comporte de la circuiterie électronique adaptée et configurée pour implémenter les étapes et procédés décrits précédemment.

## Revendications

1. Procédé de stockage temporaire d'objets (12, 13) dans un système de stockage temporaire (20) comportant un tapis de stockage temporaire (10), une unité de contrôle (21) et des moyens de signalisation (22), le tapis de stockage temporaire (10) comportant une pluralité de capteurs (11) régulièrement répartis, la position de chaque capteur (11) sur le tapis de stockage temporaire (10) étant distinctement identifiée, **caractérisé en ce que** le procédé de stockage temporaire comporte une phase de chargement dans laquelle l'unité de contrôle (21) effectue les étapes suivantes :
- lorsqu'un objet (12, 13) est déposé sur le tapis de stockage temporaire (10), réception (504) d'informations correspondantes en provenance d'au moins un des capteurs (11), et
- pour chaque dépôt d'objet (12, 13) détecté, enregistrement (505) d'une trace du dépôt de l'objet (12, 13) en association avec une référence à chacun des capteurs (11) activés par le dépôt de l'objet (12, 13) ;
et le procédé de stockage temporaire comporte une phase de déchargement dans laquelle l'unité de contrôle (21) effectue les étapes suivantes :
- détermination d'une séquence d'enlèvement (602) indiquant l'ordre dans lequel les objets (12, 13) déposés sur le tapis de stockage temporaire (10) doivent être enlevés, et pour chaque objet (12, 13) à enlever dans l'ordre de la séquence d'enlèvement :
- identification (605) des capteurs (11) référencés qui ont été activés par le dépôt de l'objet (12, 13) dans le cadre de la phase de chargement,
- transmission (606) aux moyens de signalisation (22) d'informations de signalisation identifiant la position de l'objet (12, 13) à enlever à partir des capteurs (11) identifiés, et
- lorsque l'objet (12, 13) est retiré du tapis de stockage temporaire (10), réception (610) d'informations correspondantes en provenance d'au moins un des capteurs (11), et poursuite (604) de la séquence d'enlèvement avec un nouvel objet (12, 13) à enlever, s'il existe.

2. Procédé selon la revendication 1, dans lequel, dans la phase de chargement, l'enregistrement (505) d'une trace du dépôt de l'objet (12, 13) est effectué en association avec un rang de dépôt, et dans la phase de déchargement, la séquence d'enlèvement est définie (602) en fonction des rangs de dépôt d'objets (12, 13).

3. Procédé selon l'une des revendications 1 et 2, dans lequel la phase de déchargement comporte en outre, suite à la détection de l'absence de l'objet (12, 13) à enlever par au moins un des capteurs (11) :
- vérification (611) s'il y a correspondance entre les capteurs (11) référencés en association avec le dépôt de l'objet (12, 13) et les capteurs (11) ayant détecté l'absence de l'objet (12, 13) ; et
- en cas de vérification négative, déclenchement d'une alarme (613).

4. Procédé selon la revendication 3, dans lequel l'alarme déclenchée en cas de vérification négative indique de reposer l'objet (12, 13) ayant été enlevé par erreur, et les capteurs (11) activés par le re-dépôt de l'objet (12, 13) sont référencés en association avec la trace du dépôt de l'objet (12, 13) ayant été enlevé par erreur et en remplacement des capteurs (11) référencés précédemment en association avec la trace du dépôt dudit objet (12, 13).

5. Procédé selon l'une des revendications 1 à 4, dans lequel la séquence d'enlèvement déterminée suit une méthode FIFO.

6. Procédé selon l'une quelconque des revendications 1 à 5, dans lequel la phase de chargement et la phase de déchargement sont effectuées en parallèle par l'unité de contrôle (21).

7. Procédé selon l'une quelconque des revendications 1 à 6, dans lequel l'unité de contrôle (21) calcule une position sur le tapis de stockage temporaire (10) de chaque objet (12, 13) déposé et les informations de signalisation indiquent la position calculée de l'objet (12, 13) de sorte qu'un robot (230) puisse décharger l'objet (12, 13) à partir de la position calculée.

8. Programme d'ordinateur comportant un ensemble d'instructions causant l'exécution, par un processeur, du procédé selon l'une quelconque des revendications 1 à 7, lorsque ledit programme d'ordinateur est exécuté par ledit processeur.

9. Support de stockage d'informations stockant un programme d'ordinateur comportant un ensemble d'instructions causant l'exécution, par un processeur, du procédé selon l'une quelconque des revendications 1 à 7, lorsque ledit programme d'ordinateur est lu et exécuté par ledit processeur.

10. Système de stockage temporaire (20) d'objets (12, 13) comportant un tapis de stockage temporaire (10), une unité de contrôle (21) et des moyens de signalisation (22), le tapis de stockage temporaire (10) comportant une pluralité de capteurs (11) régulièrement répartis, la position de chaque capteur (11) sur le tapis de stockage temporaire (10) étant distinctement identifiée,
**caractérisé en ce que**, dans une phase de chargement, le système de stockage temporaire (20) comporte :
- lorsqu'un objet (12, 13) est déposé sur le tapis de stockage temporaire (10), des moyens pour réceptionner des informations correspondantes en provenance d'au moins un des capteurs (11), et
- pour chaque dépôt d'objet (12, 13) détecté, des moyens pour enregistrer une trace du dépôt de l'objet (12, 13) en association avec une référence à chacun des capteurs (11) activés par le dépôt de l'objet (12, 13) ;
et, dans une phase de déchargement, le système de stockage comporte :
- des moyens pour déterminer une séquence d'enlèvement indiquant l'ordre dans lequel les objets (12, 13) déposés sur le tapis de stockage temporaire (10) doivent être enlevés,
et pour chaque objet (12, 13) à enlever dans l'ordre de la séquence d'enlèvement :
- des moyens pour identifier les capteurs (11) référencés qui ont été activés par le dépôt de l'objet (12, 13) dans le cadre de la phase de chargement,
- des moyens pour transmettre aux moyens de signalisation (22) des informations de signalisation identifiant la position de l'objet (12, 13) à enlever à partir des capteurs (11) identifiés, et
- lorsque l'objet (12, 13) est retiré du tapis de stockage temporaire (10), des moyens pour réceptionner des informations correspondantes en provenance d'au moins un des capteurs (11), et poursuite de la séquence d'enlèvement avec un nouvel objet (12, 13) à enlever, s'il existe.

11. Système de stockage temporaire (20) selon la revendication 10, dans lequel les moyens de signalisation (22) comportent un dispositif d'éclairage intégré au tapis de stockage temporaire (10), le dispositif d'éclairage comportant au moins une lampe (31, 32) identifiant l'emplacement de chaque capteur (11).

12. Système de stockage temporaire (20) selon l'une des revendications 10 et 11, dans lequel les moyens de signalisation (22) comportent un écran d'affichage comportant au moins une zone de signalisation (41, 42) représentant l'emplacement de chaque capteur (11).

13. Système de stockage temporaire (20) selon l'une quelconque des revendications 10 à 12, dans lequel chaque capteur (11) est connecté à l'unité de contrôle (21) grâce à une piste, et dans lequel le tapis de stockage temporaire (10) comporte cinq couches superposées dans l'ordre suivant : une première couche de blindage (801), une première couche d'isolation (802), une couche centrale conductrice (803) formant les capteurs (11) et les pistes, une deuxième couche d'isolation (802) et une deuxième couche de blindage (801).

14. Système de stockage temporaire (20) selon l'une quelconque des revendications 10 à 13 dans lequel l'unité de contrôle (21) comporte un processeur exécutant le programme d'ordinateur selon la revendication 8 et comporte en outre un microcontrôleur dans le tapis de stockage temporaire (10) qui exécute un logiciel embarqué effectuant des mesures et un filtrage des signaux détectés par chaque capteur (11), de sorte à détecter l'activation et la désactivation de chaque capteur (11).

15. Chaîne de production comportant un système de stockage temporaire (20) selon l'une des revendications 10 à 14 et comportant en outre un poste de production amont (210) et un poste de production aval (220), dans lequel la chaîne de production comporte des moyens pour transmettre à l'unité de contrôle (21) une commande de démarrage de la phase de chargement, de telle sorte que lorsqu'un asynchronisme survient entre le poste de production amont (210) et le poste de production aval (220) ou lorsqu'un désordonnancement survient sur le poste de production amont (210) et qu'un objet (12, 13) est déposé sur le tapis de stockage temporaire (10), l'unité de contrôle (21) détecte la présence de l'objet (12, 13), et lorsque l'asynchronisme ou respectivement le désordonnancement disparaît, la chaîne de production transmet à l'unité de contrôle (21) une commande de démarrage de la phase de déchargement.

## Patentansprüche

1. Verfahren zur Zwischenlagerung von Objekten (12, 13) in einem Zwischenlagerungssystem (20), das ein Förderband zur Zwischenlagerung (10), eine Steuereinheit (21) und Mittel zur Signalisierung (22) umfasst. Das Förderband zur Zwischenlagerung (10) enthält eine Vielzahl von gleichmäßig verteilten Sensoren (11), wobei die Position jedes Sensors (11) auf dem Förderband zur Zwischenlagerung (10) deutlich identifiziert ist. Das Verfahren ist **dadurch gekennzeichnet, dass** es zur Zwischenlagerung eine Ladephase umfasst, in der die Steuereinheit (21) die folgenden Schritte ausführt:
- wenn ein Objekt (12, 13) auf das Förderband zur Zwischenlagerung (10) abgelegt wird, werden entsprechende Informationen von mindestens einem der Sensoren (11) empfangen (504), und
- für jedes erfasste Ablegen eines Objektes (12, 13) wird eine Spur des Ablegens eines Objektes (12, 13) in Verbindung mit einem Verweis auf jeden der Sensoren (11) aufgezeichnet (505), die durch das Ablegen eines Objektes (12, 13) aktiviert werden; und dass das Verfahren zur Zwischenlagerung eine Entladephase umfasst, in der die Steuereinheit (21) die folgenden Schritte ausführt:
- Bestimmung einer Entnahmesequenz (602), die die Reihenfolge angibt, in der die auf dem Förderband zur Zwischenlagerung (10) abgelegten Objekte (12, 13) entnommen werden sollen, und für jedes Objekt (12, 13), das in der Reihenfolge der Entnahmesequenz entnommen werden soll, erfolgt Folgendes:
- Identifikation (605) der referenzierten Sensoren (11), die durch das Ablegen des Objekts (12, 13) im Rahmen der Ladephase aktiviert wurden,
- Übertragen (606) an die Mittel zur Signalisierung (22) von Signalisierungsinformationen, die Position des Objekts (12, 13), das entnommen werden soll, anhand der identifizierten Sensoren (11) identifizieren, und
- wenn das Objekt (12, 13) vom Förderband zur Zwischenlagerung (10) entnommen wird, werden entsprechende Informationen von mindestens einem der Sensoren (11) empfangen (610) und die Entnahmesequenz mit einem neuen Objekt (12, 13), das entfernt werden soll, falls dieses vorhanden ist, wird fortgesetzt (604).

2. Verfahren nach Anspruch 1, bei dem in der Ladephase die Aufzeichnung (505) einer Spur des Ablegens des Objekts (12, 13) in Verbindung mit einer Reihenfolge des Ablegens erfolgt und in der Entladephase die Entnahmesequenz in Abhängigkeit der Reihenfolgen des Ablegens der Objekte (12, 13) definiert (602) wird.

3. Verfahren nach einem der Ansprüche 1 und 2, bei dem die Entladephase zusätzlich umfasst, dass infolge der Erfassung durch mindestens einen der Sensoren (11) der Abwesenheit des Objekts (12, 13), das entnommen werden soll, Folgendes erfolgt:
- Überprüfung (611), ob eine Übereinstimmung zwischen den Sensoren (11), die in Verbindung mit dem Ablegen des Objekts (12, 13) referenziert werden, und den Sensoren (11), die eine Abwesenheit des Objekts (12, 13) erfasst haben, vorhanden ist; und bei einer negativen Überprüfung, Auslösen eines Alarms (613).

4. Verfahren nach Anspruch 3, bei dem der Alarm, der im Falle einer negativen Überprüfung ausgelöst wird, anzeigt, dass das Objekt (12, 13), das irrtümlich entnommen wurde, zurückgelegt werden soll. Zudem werden die Sensoren (11) die durch das erneute Ablegen des Objekts (12, 13), das irrtümlich entnommen wurde, aktiviert wurden, und anstelle der Sensoren (11), die zuvor in Verbindung mit der Spur des Ablegens des Objekts (12, 13) referenziert wurden, in Verbindung mit der Spur des Ablegens des Objekts (12, 13) referenziert.

5. Verfahren nach einem der Ansprüche 1 bis 4, bei dem die ermittelte Entnahmesequenz einer FIFO-Methode folgt.

6. Verfahren nach einem der Ansprüche 1 bis 5, bei dem die Ladephase und die Entladephase von der Steuereinheit (21) parallel ausgeführt werden.

7. Verfahren nach einem der Ansprüche 1 bis 6, bei dem die Steuereinheit (21) eine Position auf dem Förderband zur Zwischenlagerung (10) jedes abgelegten Objekts (12, 13) berechnet und bei dem die Signalisierungsinformationen die berechnete Position des Objekts (12, 13) anzeigen, so dass ein Roboter (230) das Objekt (12, 13) von der berechneten Position aus entladen kann.

8. Computerprogramm mit einem Satz von Anweisungen, welches die Ausführung des Verfahrens nach einem der Ansprüche 1 bis 7 durch einen Prozessor verursacht, wenn das Computerprogramm von dem Prozessor ausgeführt wird.

9. Informationsspeichermedium, das ein Computerprogramm speichert, das einen Satz von Anweisungen enthält, welches die Ausführung des Verfahrens nach einem der Ansprüche 1 bis 7 durch einen Prozessor verursacht, wenn das Computerprogramm von dem Prozessor ausgeführt wird.

10. System zur Zwischenlagerung (20) von Objekten (12, 13), welches ein Förderband zur Zwischenlagerung (10), einer Steuereinheit (21) und Mittel zur Signalisierung (22) umfasst. Das Förderband zur Zwischenlagerung (10) enthält eine Vielzahl von gleichmäßig verteilten Sensoren (11), wobei die Position jedes Sensors (11) auf dem Förderband zur Zwischenlagerung (10) deutlich identifiziert ist. Es ist **dadurch gekennzeichnet, dass** in einer Ladephase das System zur Zwischenlagerung (20) Folgendes umfasst:
- wenn ein Objekt (12, 13) auf das Förderband zur Zwischenlagerung (10) abgelegt wird, sind Mittel vorhanden, um entsprechende Informationen von mindestens einem der Sensoren (11) zu empfangen (504), und
- für jede erfasste Ablegen eines Objekts (12, 13) sind Mittel vorhanden, um eine Spur des Ablegens eines Objekts (12, 13) in Verbindung mit einem Verweis auf jeden der Sensoren (11) aufzuzeichnen, die wiederum durch das Ablegen eines Objekts (12, 13) aktiviert wurden; dass in einer Entladephase das System zur Zwischenlagerung Folgendes umfasst:
- Mittel zur Bestimmung einer Entnahmesequenz, die die Reihenfolge angibt, in der die auf dem Förderband zur Zwischenlagerung (10) abgelegten Objekte (12, 13) entnommen werden sollen, und für jedes Objekt (12, 13), das in der Reihenfolge der Entnahmesequenz entnommen werden soll:
- Mittel zur Identifikation der referenzierten Sensoren (11), die durch das Ablegen des Objekts (12, 13) im Rahmen der Ladephase aktiviert wurden, Mittel zum Übertragen an die Mittel zur Signalisierung (22) von Signalisierungsinformationen, die die Position des Objekts (12, 13), das entnommen werden soll, anhand der identifizierten Sensoren (11) identifizieren, und
- wenn das Objekt (12, 13) vom Förderband zur Zwischenlagerung (10) entnommen wird, Mittel, um entsprechende Informationen von mindestens einem der Sensoren (11) zu empfangen (610) und um die Entnahmesequenz mit einem neuen Objekt (12, 13), das entfernt werden soll, falls dieses vorhanden ist, fortzusetzen.

11. System zur Zwischenlagerung (20) nach Anspruch 10, bei dem die Mittel zur Signalisierung (22) eine im Förderband zur Zwischenlagerung (10) eingebaute Beleuchtungsvorrichtung umfassen. Diese Beleuchtungsvorrichtung umfasst mindestens eine Lampe (31, 32), die den Standort jedes Sensors (11) identifiziert.

12. System zur Zwischenlagerung (20) nach einem der Ansprüche 10 oder 11, bei dem die Mittel zur Signalisierung (22) einen Anzeigebildschirm mit mindestens einem Signalisierungsbereich (41, 42) umfassen, der den Standort jedes Sensors (11) darstellt.

13. System zur Zwischenlagerung (20) nach einem der Ansprüche 10 bis 12, bei dem jeder Sensor (11) über eine Spur mit der Steuereinheit (21) verbunden ist und bei dem das Förderband zur Zwischenlagerung (10) aus fünf übereinanderliegenden Schichten in folgender Reihenfolge besteht: eine erste Schicht zur Abschirmung (801), eine erste Schicht zur Isolierung (802), eine leitende Kernschicht (803), die die Sensoren (11) und die Spuren bildet, eine zweite Schicht zur Isolierung (802) und eine zweite Schicht zur Abschirmung (801).

14. System zur Zwischenlagerung (20) nach einem der Ansprüche 10 bis 13, bei dem die Steuereinheit (21) einen Prozessor enthält, der das Computerprogramm nach Anspruch 8 ausführt, und außerdem einen Mikrocontroller im Förderband zur Zwischenlagerung (10) enthält, der eine eingebettete Software ausführt, die Messungen und Filterung der von jedem Sensor (11) erfassten Signale durchführt, um die Aktivierung und Deaktivierung jedes Sensors (11) zu erkennen.

15. Fertigungsstraße (Produktionslinie) mit einem System zur Zwischenlagerung (20) nach einem der Ansprüche 10 bis 14 und ferner mit einer vorgeschalteten Produktionsstation (210) und einer nachgeschalteten Produktionsstation (220), bei dem die Fertigungsstraße (Produktionslinie) Mittel umfasst, um der Steuereinheit (21) einen Befehl zum Starten der Ladephase zu übermitteln, so dass, wenn zwischen der vorgeschalteten Produktionsstation (210) und der nachgeschalteten Produktionsstation (220) ein Asynchronismus auftritt oder wenn an der vorgeschalteten Produktionsstation (210) eine Fehleinteilung auftritt und ein Objekt (12, 13) auf dem Förderband zur Zwischenlagerung (10) abgelegt wird, die Steuereinheit (21) das Vorhandensein des Objekts (12, 13) erkennt, und wenn der Asynchronismus bzw. die Fehlanpassung verschwindet, die Produktionslinie einen Befehl zum Starten der Entladephase an die Steuereinheit (21) überträgt.

## Claims

1. Method for temporarily storing objects (12, 13) in a temporary-storage system (20) comprising a temporary-storage belt (10), a control unit (21) and signalling means (22), the temporary-storage belt (10) comprising a plurality of regularly distributed sensors (11), the position of each sensor (11) on the temporary-storage belt (10) being distinctly identified,
**characterised in that** the temporary-storage method comprises a loading phase wherein the control unit (21) performs the following steps:
- when an object (12, 13) is deposited on the temporary-storage belt (10), receiving (504) corresponding information coming from at least one of the sensors (11), and
- for each deposition of an object (12, 13) detected, recording (505) a trace of the deposition of the object (12, 13) in association with a reference to each of the sensors (11) activated by the deposition of the object (12, 13);
and the temporary-storage method comprises an unloading phase wherein the control unit (21) performs the following steps:
- determining a removal sequence (602) indicating the order in which the objects (12, 13) deposited on the temporary-storage belt (10) must be removed,
and, for each object (12, 13) to be removed in the order of the removal sequence:
- identifying (605) the referenced sensors (11) that have been activated by the deposition of the object (12, 13) in the context of the loading phase,
- transmitting (606) to the signalling means (22) signalling information identifying the position of the object (12, 13) to be removed from the sensors (11) identified, and
- when the object (12, 13) is removed from the temporary-storage belt (10), receiving (610) corresponding information coming from at least one of the sensors (11) and continuing (604) the removal sequence with a new object (12, 13) to be removed, if such exists.

2. Method according to claim 1, wherein, in the loading phase, the recording (505) of a trace of the deposition of the object (12, 13) is implemented in association with a deposition rank, and, in the unloading phase, the removal sequence is defined (602) according to the deposition ranks of objects (12, 13).

3. Method according to one of claims 1 and 2, wherein the unloading phase further comprises, following the detection of the absence of the object (12, 13) to be removed by at least one of the sensors (11):
- checking (611) whether there is a match between the sensors (11) referenced in association with the deposition of the object (12, 13) and the sensors (11) that detected the absence of the object (12, 13); and
- in the case of a negative check, triggering an alarm (613).

4. Method according to claim 3, wherein the alarm triggered in the case of a negative check indicates re-placing the object (12, 13) that was removed in error, and the sensors (11) activated by the redeposition of the object (12, 13) are referenced in association with the trace of the deposition of the object (12, 13) that was removed in error and in replacement for the sensors (11) referenced previously in association with the trace of the deposition of said object (12, 13).

5. Method according to one of claims 1 to 4, wherein the removal sequence determined follows a FIFO method.

6. Method according to any one of claims 1 to 5, wherein the loading phase and the unloading phase are implemented in parallel by the control unit (21).

7. Method according to any one of claims 1 to 6, wherein the control unit (21) calculates a position on the temporary-storage belt (10) of each object (12, 13) deposited and the signalling information indicates the calculated position of the object (12, 13) so that a robot (230) can discharge the object (12, 13) from the calculated position.

8. Computer program, comprising a set of instructions causing the execution, by a processor, of the method according to any one of claims 1 to 7, when said computer program is executed by said processor.

9. Information storage medium storing a computer program comprising a set of instructions causing the execution, by a processor, of the method according to any one of claims 1 to 7, when said computer program is read and executed by said processor.

10. System (20) for the temporary storage of objects (12, 13), comprising a temporary-storage belt (10), a control unit (21) and signalling means (22), the temporary-storage belt (10) comprising a plurality of regularly distributed sensors (11), the position of each sensor (11) on the temporary-storage belt (10) being distinctly identified,
**characterised in that**, in a loading phase, the temporary-storage system (20) comprises:
- when an object (12, 13) is deposited on the temporary-storage belt (10), means for receiving corresponding information coming from at least one of the sensors (11), and
- for each deposition of an object (12, 13) detected, means for recording a trace of the deposition of the object (12, 13) in association with a reference to each of the sensors (11) activated by the deposition of the object (12, 13);
and, in an unloading phase, the storage system comprises:
- means for determining a removal sequence indicating the order in which the objects (12, 13) deposited on the temporary-storage belt (10) must be removed,
and, for each object (12, 13) to be removed in the order of the removal sequence:
- means for identifying the referenced sensors (11) that have been activated by the deposition of the object (12, 13) in the context of the loading phase,
- means for transmitting to the signalling means (22) signalling information identifying the position of the object (12, 13) to be removed from the sensors (11) identified, and
- when the object (12, 13) is removed from the temporary-storage belt (10), means for receiving corresponding information coming from at least one of the sensors (11) and continuing the removal sequence with a new object (12, 13) to be removed, if such exists.

11. Temporary-storage system (20) according to claim 10, wherein the signalling means (22) comprise an illumination device integrated in the temporary-storage belt (10), the illumination device comprising at least one lamp (31, 32) identifying the location of each sensor (11).

12. Temporary-storage system (20) according to one of claims 10 and 11, wherein the signalling means (22) comprise a display screen comprising at least one signalling zone (41, 42) showing the location of each sensor (11).

13. Temporary-storage system (20) according to any one of claims 10 to 12, wherein each sensor (11) is connected to the control unit (21) by means of a track, and wherein the temporary-storage belt (10) comprises five layers superimposed in the following order: a first shielding layer (801), a first insulation layer (802), a conductive central layer (803) forming the sensors (11) and the tracks, a second insulation layer (802) and a second shielding layer (801)..

14. Temporary-storage system (20) according to any one of claims 10 to 13, wherein the control unit (21) comprises a processor executing the computer program according to claim 8 and furthermore comprises a microcontroller in the temporary-storage belt (10) that executes embedded software performing measurements and a filtering of the signals detected by each sensor (11), so as to detect the activation and the deactivation of each sensor (11).

15. Production line comprising a temporary-storage system (20) according to one of claims 10 to 14 and further comprising an upstream production station (210) and a downstream production station (220), wherein the production line comprises means for transmitting to the control unit (21) a command to start the loading phase, so that, when an asynchronism occurs between the upstream production station (210) and the downstream production station (220) or when a sequencing fault occurs on the upstream production station (210) and an object (12, 13) is deposited on the temporary-storage belt (10), the control unit (21) detects the presence of the object (12, 13), and, when the asynchronism or respectively the sequencing fault disappears, the production line transmits to the control unit (21) a command to start the unloading phase.
